(19) Europäisches Patentamt European Patent Office Office européen des brevets

(11) **EP 4 733 353 A1**

(12) **EUROPEAN PATENT APPLICATION**

(43) Date of publication:
29.04.2026 Bulletin 2026/18

(21) Application number: 25210688.5

(22) Date of filing: **23.10.2025**

(51) International Patent Classification (IPC):
*C08L 23/10* (2006.01)     *C08L 77/02* (2006.01)
*C08L 51/06* (2006.01)     *C08L 23/08* (2025.01)

(52) Cooperative Patent Classification (CPC):
(C-Sets available)
**C08L 23/10; C08L 77/02;** C08L 2205/03;
C08L 2205/035          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.10.2024 NL 2038898**

(71) Applicant: **QuinLyte Holding B.V.**
**6132 HN Sittard (NL)**

(72) Inventor: **CHEN, Hao**
**SITTARD (NL)**

(74) Representative: **Algemeen Octrooi- en Merkenbureau B.V.**
**P.O. Box 645**
**5600 AP Eindhoven (NL)**

(54) **POLYMER COMPOSITION, EXTRUDED ARTICLE, AND METHOD FOR PREPARING SAID ARTICLE**

(57) The present invention relates to a polymer composition comprising one or more polyamides, and optionally one or more vinyl alcohols, one or more maleic anhydride-grafted polyolefins, and one or more polyolefin compositions, wherein the total maleic anhydride concentration is less than 0.15 wt.%. The present invention moreover relates to an extruded article comprising the polymer composition and to methods of manufacturing of an extruded article.

(52) Cooperative Patent Classification (CPC): (Cont.)

C-Sets
**C08L 23/10, C08L 77/02, C08L 23/0861,**
**C08L 51/06;**
**C08L 23/10, C08L 77/02, C08L 51/06;**
**C08L 77/02, C08L 23/04, C08L 51/06;**
**C08L 77/02, C08L 23/0861, C08L 23/04,**
**C08L 51/06**

**Description**

TECHNICAL FIELD

The present invention relates to a polymer composition comprising (A) one or more polyamides (PAs), optionally one or more vinyl alcohols (VAs), (B) one or more maleic anhydride-grafted polyolefins (MAH-g-POs), and (C) a polyolefin (PO) composition. Further, the invention relates to an extruded article, and to a method of preparing said article.

BACKGROUND

In many applications for polymer compositions, sufficient barrier properties are required to minimize the permeation of both oxygen (non-polar) and water vapour (polar). Barrier articles, such as films, tubes, containers, typically have a multiple-layer structure prepared from multiple materials. There is no single mono-material (single material such as polymer blend or composition) yet that can provide a good barrier to both polar and non-polar substances. These multiple material products are very difficult for recycling. Most of them end up with incineration or in landfill. In EP24192268 of the present inventor, barrier films where disclosed. For example, for food application good barrier properties reduce the spoiling of food and for other vacuum applications, good barrier properties allow the vacuum to remain. EP3670131 of the present inventor relates to a non-heterophasic polypropylene composition comprising polyamides and/or ethylene vinyl alcohols and polypropylene, forming two distinct DSC phases with defined crystallisation and melting characteristics.

To arrive at a cradle-to-cradle circularity, it is required that a mono-material must be used, and this mono-material must have the comparable performance to that of the current multi-material solutions.

Like metal alloys are created to combine the performance advantages of different types of metals, making a high-quality polymer alloy could be an effective solution to combine the benefits of different polymers. To reach the desired performance described above, the polymer alloy must contain both polar and nonpolar components. Such type of alloy falls under immiscible polymer blends. In general, the morphologies of polymer blends can be divided into two typical classifications: i) matrix with dispersed droplets morphology, ii) co-continuous morphology. The latter is desired because it may allow all polymer components to perform to the maximal level. It is very difficult for immiscible polymer blends to reach and keep large fraction of co-continuous phase at the level of polymer blends itself.

OBJECTS

It is an object of the present invention to provide an improved polymer composition that has optimal barrier properties, in particular good oxygen and water vapor barrier properties.

It is a further object of the present invention to provide a polymer composition that presents good barrier properties and that sufficient bonding to polypropylene (PP) during co-extrusion.

It is an even further object of the present invention to provide a polymer composition that presents good barrier properties and that sufficient bonding to polyethylene (PE) during co-extrusion.

SUMMARY

In a first aspect, the invention relates to a polymer composition according to claim 1.

In a second aspect, the present invention relates to an extruded article comprising the polymer composition according to the first aspect in an amount of at least 75 wt.% of the weight of the article.

In a third aspect, the invention relates to a method for the manufacturing of an extruded article according to claim 15.

In a fourth aspect, the invention relates to a method for the manufacturing of an extruded article according to claim 16.

In a fifth aspect, the invention relates to a polymer composition according to claim 17.

Embodiments of the first aspect of the present invention are also applicable for the fifth embodiment and correspondingly for the second, third and fourth aspect.

The present inventor has observed that polymer compositions, which are a combination of very specific polymers with very specific characteristics as specified in the claims provide the required properties. The combination of materials after being extruded and optionally moulded was surprisingly found to have both a high oxygen barrier and a high moisture (water vapor) barrier. These materials further were surprisingly found to combine the excellent properties of polyamides, vinyl alcohol polymers, and polypropylenes, being a high tensile modulus and strength, good impact resistance, good heat resistance, high abrasion resistance with low friction, high fatigue resistance, high dimensional stability, very low water moisture absorption, very low dielectric constants.

DESCRIPTION OF EMBODIMENTS

Polymer composition

As stated above, the present invention relates in a first aspect to a polymer composition according to claim 1. In an embodiment, the invention relates to a polymer composition which comprises (A) between 30 and 60 wt.% of one or more polyamides and one or more vinyl alcohols, (B) between 1.5 and 15 wt.% of one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins; and (C) between 25 and 68.5 wt.% of one or more polyolefin composition selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has a MFR of less than 5 g/10min measured at 190°C under a load of 2.16kg measured according to ISO 1133:1-2011; wherein the wt.% of the polymers under (A), (B), and (C) is based on the combined weight of (A), (B), and (C); and wherein the total maleic anhydride concentration is less than 0.15 wt.%, based on the combined weight of (A), (B), and (C). Embodiments applicable to this are disclosed in claims 2 - 12. Preferably, said polypropylene compositions comprise at least 25 wt.% of one or more heterophasic propylene copolymers, based on the weight of the polypropylene compositions.

The present invention more in particular relates to a polymer composition which comprises:

(A) between 30 and 60 wt.% of one or more polyamides and one or more vinyl alcohols,
(B) between 1.5 and 15 wt.% of one or more maleic anhydride-grafted polyolefins, each of the one or more maleic anhydride-grafted polyolefins having:

i) a MFR of above 10 g/10min measured at 190°C under a load of 2.16kg measured according to ISO 1133:1-2011, and
ii) a maleic anhydride concentration of between 0.1 and 1.8 wt.% based on the weight of maleic anhydride-grafted polyolefins; and

(C) between 25 and 68.5 wt.% of one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has a MFR of less than 5 g/10min measured at 190°C under a load of 2.16kg measured according to ISO 1133:1-2011;

wherein the wt.% of the polymers under (A), (B), and (C) is based on the combined weight of (A), (B), and (C);
on the proviso that when component (C) consists of one or more polypropylene compositions, said polypropylene compositions comprise at least 25 wt.% of one or more heterophasic propylene copolymers, based on the weight of the polypropylene compositions; and
wherein the total maleic anhydride concentration is less than 0.15 wt.%, based on the combined weight of (A), (B), and (C).

In an embodiment, 100 wt.% of (C) is one or more polypropylene compositions, in other words, there is no polyethylene present. In such an embodiment, said one or more polypropylene compositions of (C) comprise at least 25 wt.% of one or more heterophasic propylene copolymers.

The present invention also relates to a polymer composition which comprises:

(A) between 30 and 60 wt.% of one or more polyamides and one or more vinyl alcohols,
(B) between 1.5 and 15 wt.% of one or more maleic anhydride-grafted polyolefins, each of the one or more maleic anhydride-grafted polyolefins having:

i) a MFR of above 10 g/10min measured at 190°C under a load of 2.16kg measured according to ISO 1133:1-2011, and
ii) a maleic anhydride concentration of between 0.1 and 1.8 wt.% based on the weight of maleic anhydride-grafted polyolefins; and

and (C) between 25 and 68.5 wt.% of one or more polyolefin composition selected from a polyethylene composition or a combination thereof with a polypropylene composition, wherein: i) said polypropylene composition has an MFR of less than 25 g/10min measured at 230°C under a load of 2.16kg measured according to ISO 1133:1-2011, and/or ii) said polyethylene composition has a MFR of less than 5 g/10min measured at 190°C under a load of 2.16kg measured according to ISO 1133:1-2011;

wherein the wt.% of the polymers under (A), (B), and (C) is based on the combined weight of (A), (B), and (C);

wherein the total maleic anhydride concentration is less than 0.15 wt.%, based on the combined weight of (A), (B), and (C). It should be noted that where it reads "between 30 and 60 wt.%", 30 and 60 wt.% are included, and this could also be written as "30-60 wt.%". This is also valid for all similar mentions of ranges throughout this description.

"Polymer composition" as used in the present description means either a polymer alloy, a polymer blend, or a mixture of a polymer alloy and polymer blend.

"Polymer alloy" as used in the present description means a material that is analogous to metal alloys, wherein at least two different macromolecular substances (viz. polymers or copolymers) are reactively blended, not including polymer additives. (Polymer) alloy according to the present description specifically refers to an immiscible blend exhibiting at least two phases (of at least two blend components) but with low interfacial tension. Preferably, the phases are mixed to such an extent that the inhomogeneity caused by different phases is on a small enough scale not to be apparent in use. A polymer alloy according to the present invention is prepared by reactive extrusion.

"Polymer blend" as used in the present description is either a blend of components (A), (B), and (C) or a mixture of a polymer alloy and one or more of components (A), (B), and/or (C). These are non-reactively blended during extrusion when preparing an article.

In an embodiment, the polymer composition will consist of (A), (B), and (C), in other words, the combined weight of (A), (B), and (C) forms 100 wt.% of the polymer composition. In another embodiment, the polymer composition will comprise in addition to (A), (B), and (C), one or more additives. In other words, combined weight of (A), (B), and (C) forms < 100 wt.% of the polymer composition, for example at least 95 wt.%, at least 98 wt.%, at least 99 wt.%. The remaining amount can be made up by one or more additives, that are known to a person skilled in the art, such as antioxidants, lubricants etc.

The ratio between PA6 and PA6/66 - if both are present as polyamides - can be determined by a skilled person depending application requirement. The addition of PA6/66 to PA6 will in general improve the bubble stability and blow-up-ratio (BUR) in blown film applications. However, when combined with PA6, a mixture of PA6 and PA6/66 will have increased costs, decreased mechanical properties, and decreased barrier properties. Moreover, a higher BUR is not required for all applications and there are other ways to increase bubble stability using advanced machinery.

The ratio between EvOH and PVOH - if both are present as vinyl alcohols - can be determined by a skilled person depending application requirement.

In an embodiment, the polymer composition will have an oxygen permeability (OP) of less than 6 mL·mm/(mm$^2$·day), preferably less than 5 mL·mm/(mm$^2$·day), more preferably less than 4 mL·mm/(mm$^2$·day), even more preferably less than 3.5 mL·mm/(mm$^2$·day), measured according ASTM F1927-20 at 23°C and 50% relative humidity.

In an embodiment, the polymer composition will have a water vapour permeability (WVP) of less than 0.50 gram·mm/(mm$^2$·day), preferably less than 0.40 gram·mm/(mm$^2$·day), more preferably less than 0.30 gram·mm/(mm$^2$·day), even more preferably 0.25 gram.mm/(mm$^2$.day), measured according to ASTM F1249-20 at 23°C and 85% relative humidity.

In an embodiment, the polymer composition has an oxygen permeability of less than 6 mL·mm/(mm$^2$·day) measured according ASTM F1927-20 at 23°C and 50% relative humidity and having a water vapour permeability of less than 0.40 gram·mm/(mm$^2$·day) measured according to ASTM F1249-20 at 23°C and 85% relative humidity.

In an embodiment, the polymer composition has an oxygen permeability of less than 5 mL·mm/(mm$^2$·day) measured according ASTM F1927-20 at 23°C and 50% relative humidity and having a water vapour permeability of less than 0.30 gram·mm/(mm$^2$·day) measured according to ASTM F1249-20 at 23°C and 85% relative humidity.

In a specific embodiment, the polymer composition is an polymer alloy or a blend of a polymer alloy with one or more components (A), (B) and/or (C) and will have an OP of less than 3.5 mL·mm/(mm$^2$·day) and a WVP of less than 0.25 gram·mm/(mm$^2$·day).

In an embodiment, (A) comprises one or more polyamides and one or more vinyl alcohols, (B) comprises 100 wt.% of the weight of (B) of maleic anhydride-grafted polypropylene, and (C) comprises 100 wt.% of the weight of (C) of one or more polypropylenes. In a specific embodiment of the polymer composition or blend (A) comprises polyamide and EVOH, wherein (B) comprises maleic anhydride-grafted polypropylene, and wherein (C) comprises polypropylene said composition or blend having an oxygen permeability of less than 5 mL·mm/(mm$^2$·day) and a WVP of less than 0.50 gram·mm/(mm$^2$·day).

In an more specific embodiment, (A) comprises between 1 and 80 wt.% one or more vinyl alcohols, selected from poly vinyl alcohol (PVOH), ethylene vinyl alcohol (EvOH), or a combination thereof, based on the weight of (A); (B) comprises 100 wt.% of the weight of (B) of maleic anhydride-grafted polypropylene, and (C) comprises 100 wt.% of the weight of (C) of one or more polypropylenes

In an embodiment, (A) comprises one or more polyamides and one or more vinyl alcohols, (B) comprises 100 wt.% of the weight of (B) of maleic anhydride-grafted polyethylene, and (C) comprises 100 wt.% of the weight of (C) of one or more polyethylenes. In a specific embodiment of the polymer composition or blend (A) comprises polyamide and EVOH, wherein (B) comprises maleic anhydride-grafted polyethylene, and wherein (C) comprises polyethylene said composition or blend having an oxygen permeability of less than 5 mL·mm/(mm$^2$·day) and a WVP of less than 0.30 gram·mm/(mm$^2$·day).

In an embodiment, (A) comprises between 1 and 80 wt.% one or more vinyl alcohols, selected from poly vinyl alcohol (PVOH), ethylene vinyl alcohol (EvOH), or a combination thereof, based on the weight of (A); (B) comprises 100 wt.% of the weight of (B) of maleic anhydride-grafted polyethylene, and (C) comprises 100 wt.% of the weight of (C) of one or more polyethylenes.

In an embodiment, the polymer composition has a density of between 0.96 gram/cm$^3$ and 1.05 gram/cm$^3$, preferably between 0.97 gram/cm$^3$ and 1.00 gram/cm$^3$ measured according to ISO 1183-1:2019, method A - immersion method. This density is beneficial when an article made from the polymer composition will be recycled, because the article will float in (unsalted) water and will be easily separated from most other engineering polymers whose density is higher than that of water. And it could also be separated from polyolefin polymers whose density is below 0.96 gram/cm$^3$. In 80 °C hot water with a density of 0.96 gram/cm$^3$, the polyolefins will still float, while the polymer composition according to the present invention will start to sink.

The MFR ratio is a numerical value obtained by using the MFR number of MAH-g-PP or MAH-g-PE in component (B) divided by the corresponding MFR number of PP or PE in component (C) according to the following equation (I):

$$MFR\ ratio \quad = \frac{MFR_{MAH-g-PE\,(B)}}{MFR_{PE\,(C)}} \ or \ \frac{MFR_{MAH-g-PP\,(B)}}{MFR_{PP(C)}} \qquad \text{Equation (I)}$$

In an embodiment, the MFR ratio is > 8, wherein the MFR ratio is according to equation (I) wherein $MFR_{MAH-g-PE(B)}$ or $MFR_{MAH-g-PP(B)}$ is the MFR value of MAH-g-PE or MAH-g-PB in component (B) respectively; $MFR_{PE}$ or $MFR_{PP}$ is the MFR number of PE or PP in component (C), respectively; and the MFR values are obtained at 190°C 2.16kg measured according to ISO 1133:1-2011.

In fifth aspect, the invention relates to a polymer composition according to claim 17. The polymer composition according to claim 17 comprises (A) (i) one or more polyamides and (ii) one or more vinyl alcohols, (B) one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins; and (C) one or more polyolefin compositions; wherein the total maleic anhydride concentration is less than 0.18 wt.%, based on the combined weight of (A), (B), and (C), wherein the polymer composition has an oxygen permeability of less than 6 mL·mm/(mm$^2$·day), a density of between 0.96 gram/cm3 and 1.05 gram/cm3, and a water vapour permeability of less than 0.40 gram·mm/(mm$^2$·day).

The present inventor has observed that in case all of the components (A), (B) and (C) are present as discussed in this aspect, and in addition if the oxygen permeability, the density and the water vapor permeability are as disclosed in this fifth aspect, the composition will generally have the properties as discussed in the first aspect.

Each of the components (A), (B), and (C) will be discussed separately below.

_Component A_

According to claim 1, the polymer composition comprises as component (A) between 30 and 60 wt.% of (i) one or more polyamides, selected from polyamide 6, polyamide 6/66, or a combination thereof, wherein each of the one or more polyamides has a relative solvent viscosity (RSV) measured in 90% formic acid of 2.5 or higher, in an amount of between 20 and 100 wt.% based on the weight of (A); and (ii) one or more vinyl alcohols, selected from poly vinyl alcohol (PVOH), ethylene vinyl alcohol (EvOH), or a combination thereof, in an amount of between 0 and 80 wt.% based on the weight of (A).

According to claim 17, the polymer composition comprises as component (A) (i) one or more polyamides, selected from polyamide 6, polyamide 6/66, or a combination thereof, in an amount of between 20 and 100 wt.% based on the weight of (A), wherein each polyamide has a relative solvent viscosity (RSV) measured in 90% formic acid of 2.5 or higher; and (ii) one or more vinyl alcohols, selected from poly vinyl alcohol (PVOH), ethylene vinyl alcohol (EvOH), or a combination thereof in an amount of between 0 wt.% and 80 wt.% based on the weight of (A).

Component (A) comprises one or more polyamides and optionally also one or more vinyl alcohols. As polyamides may be mentioned polyamide 6 (PA6, Nylon 6 or polycaprolactam) or Polyamide 6/66 (PA 6/66) being a copolymer made from two different types of polyamide materials: PA6 and PA66. Preferably, component (A)(i) comprises PA6/66 or a combination of PA6/66 with PA6.

Polyamide 6 is synthesized by ring-opening polymerization of caprolactam. Caprolactam has 6 carbons, hence the name Nylon 6 (or PA6). It is known for excellent toughness, flexibility, and impact resistance. PA6 has a lower melting point (~220°C), making it easier to process but less thermally resistant compared to Nylon 66 (PA66).

Polyamide 66 is made from hexamethylenediamine and adipic acid. It offers higher strength, thermal resistance (melting point ~265°C), and superior wear resistance. In addition, it is more dimensionally stable under heat than Nylon 6.

Polyamide 6/66 is a combination of two polymers each having specific characteristics, and by combining them in a copolymer, the material has inferior thermal, mechanical, and barrier properties to Polyamide 6 and Polyamide 66. However, it has excellent processing properties for film and profile extrusion as well as blown molding.

The medium to high viscosity of each polyamide, defined by RSV of 2.5 or higher, is beneficial to allow the manufacture of extruded articles, especially in films, in moulded articles and in medium-to-high tenacity fiber from the polymer composition.

In an embodiment, each polyamide has a relative solvent viscosity (RSV) measured in 90% formic acid of 2.5 - 2.7.

In an embodiment, polyamide 6 and/or polyamide 6/66 each have a relative solvent viscosity (RSV) measured in 90% formic acid of 2.7 or higher, this embodiment is preferably used when the plastic article is injection or blown moulded for example a body panel, a manifold, a container or a bottle, or extruded for example a cast film, a blown film, a sheet, a profile, a tube, a foam, and but not least a medium-to-high tenacity fiber.

In an embodiment, (A) comprises between 20 and 90 wt.%, preferably between 30 and 90 wt.%, more preferably between 40 and 70 wt.%, or even between 40 and 60 wt.% of the one or more polyamides and between 10 and 80 wt.%, preferably between 10 and 70 wt.%, more preferably between 30 and 60 wt.%, or even between 40 and 60 wt.% of the one or more vinyl alcohols based on the weight of (A).

In an embodiment, wherein (A) comprises 100 wt.% the one or more polyamides based on the weight of (A), then (A) is present in the polymer composition in an amount of between 35 and 60 wt.% based on the combined weight of (A), (B), and (C). In this embodiment, when there is no vinyl alcohol present in the polymer composition, the lower limit of the amount of component (A) present, is 35 wt.% (instead of 30 wt.%).

The combined amounts of one or more polyamides and one or more vinyl alcohols is 100 wt.% based on the weight of (A). In other words, (A) consists of one or more polyamides and one or more vinyl alcohols. In an embodiment, the combined amounts of PA6, PA6/66, EVOH and PVOH is 100 wt.% based on the weight of (A). The addition of EVOH and PVOH to the one or more polyamides of (A) will increase the barrier properties and allows to achieve a lower OP.

*Component B*

According to claim 1, the polymer compositions comprises as component (B) between 1.5 and 15 wt.% of one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins.

According to claim 17, the polymer composition comprises as component (B) one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins.

Component B is a polymer composition comprising one or more functionalized olefin (e.g. propylene or ethylene) polymers on which maleic anhydride is grafted (MAH-g-PO). Component B has the function to reduce the interfacial tension between component (A) and (C) and to chemically bond component (A), then defuse into (C) which is the matrix phase. Maleic anhydride-grafted PO is preferred because it as the simplest cyclic anhydride creates strong covalent bond (imide linkage) after reaction with the amine end group of polyamides.

Each of the one or more maleic anhydride-grafted polyolefins has a MFR of above (greater than) 10 g/10min measured at 190°C under a load of 2.16kg measured according to ISO 1133:1-2011. Each of the one or more maleic anhydride-grafted polyolefins has a maleic anhydride concentration of between 0.1 and 1.8 wt.% based on the weight of maleic anhydride-grafted polyolefins.

In an embodiment, the one or more maleic anhydride-grafted polyolefins is a maleic anhydride-grafted polypropylene, a maleic anhydride-grafted polyethylene or a combination thereof.

Several types of MAH-g-PPs are available, and these are usually defined by the following features: i) the MFR (g/10min @ 190°C), ii) the weight percentage of maleic anhydride (MA). The MFR may for example range between 5 and 100 or may be above 100 g/10min. The MA content may be for example, 0.1 wt.%, 0.3 wt.%, 0.5 wt.% , 0.8 wt.%, 1.0 wt.%, 1.2 wt.%, 1.4 wt.%, 1.6 wt.%, or 1.8 wt.%. Any other value between 0.1 and 1.8 wt.% is also possible. The maleic anhydride-grafted polypropylenes are defined as polypropylene homopolymers and/or copolymers. Suitable examples are homopolymers, (heterophasic-) block and random copolymers, and polyolefin elastomers wherein propylene is the main (backbone) component.

In an embodiment, the MAH-g-PP for component B has an MFR of above 30 g/10min, preferably above 40 g/10min.

Several types of MAH-g-PEs are available, and these are usually defined by the following features: i) the MFR (g/10min @ 190°C), ii) the weight percentage of maleic anhydride (MA). The MFR may for example range between 0.5 and 5 or may be above 5 g/10min, preferably above 7 g/10min. The MA content may be for example, 0.1 wt.%, 0.3 wt.%, 0.5 wt.% , 0.8 wt.% , 1.0 wt.%, 1.2 wt.%, 1.4 wt.%, 1.6 wt.%, or 1.8 wt.%. Any other value between 0.1 and 1.8 wt.% is also possible. The maleic anhydride-grafted polyethylenes are defined as polyethylene homopolymers and/or copolymers. Suitable examples are low-density polyethylene (LDPE), linear low-density polyethylene (LLDPE), very-low-density polyethylene (VLDPE), Medium-density polyethylene (MDPE), high-density polyethylene (HDPE); ethylene-propylene copolymers, and ethylene based elastomer wherein ethylene is the main (backbone) component.

What is an important feature of the present composition is the total maleic anhydride concentration including, reacted and unreacted MAH, based on the combined weight of (A), (B), and (C), which should be less than 0.15 wt.%, preferably less than 0.12 wt.%, such as less than 0.1 wt.%, and more preferably between 0.01 wt.% and 0.15 wt.%, or between 0.015 wt.% and 0.1 wt.%. Too high MA concentration might hinder the performance of component (A) in the barrier polymer phase. Too low MAH concentration may not be able to sufficiently reduce the interfacial tension between the polyolefins and the polyamide phases and might result in phase segregation.

The exact amount of component (B) in wt.% of combined weight of component (A), (B), and (C) is determined by the desired total MA concentration ('total MA concentration limit'), based on the combined weight of component (A), (B), and (C), and the average MA concentration in component (B), as in equation (II).

$$Amount\ of\ component\ B\ (wt.\%) = \frac{total\ MA\ concentration\ limit}{average\ MA\ concentration\ in\ component\ B} \quad Equation\ (II)$$

### Component C

According to claim 1, the polymer composition comprises as component (C) between 25 and 68.5 wt.% of one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has a MFR of less than 5 g/10min measured at 190°C under a load of 2.16kg measured according to ISO 1133:1-2011.

According to claim 17, the polymer composition comprises as component (C) one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has an MFR of less than 5 g/10min measured at 190°C under a load of 2.16kg measured according to ISO 1133:1-2011.

In particular, (C) comprises between 25 and 68.5 wt.% of one or more polyolefin compositions, selected from a polypropylene composition, a polyethylene composition or a combination thereof.

The polypropylene composition of component (C) has an MFR of less than 25 g/10min measured at 230°C under a load of 2.16kg measured according to ISO 1133:1-2011, preferably less than 15 g/10min, more preferably less than 10 g/10min.

The polyethylene composition of component (C) has a MFR of less than 5 g/10min measured at 190°C under a load of 2.16kg measured according to ISO 1133:1-2011, preferably less than 2 g/10min, more preferably less than 1 g/10min.

One or more propylene containing polymers may be selected from the group consisting of *i)* polypropylene homopolymers; *ii)* polypropylene random copolymers; *iii)* polypropylene heterophasic copolymers which have homopolymer or random copolymer matrix with a dispersed rubbery copolymer phase; and *iv)* elastomer modified polypropylenes produced by blending/reacting polypropylene with an olefinic elastomer such as EPDM, EPR, EVA and SBS, and a combination of two or more thereof.

One or more ethylene containing polymers may be selected from the group consisting of *i)* low-density polyethylene (LDPE); *ii)* linear low-density polyethylene (LLDPE), *iii)* Medium-density polyethylene (MDPE); and *iv)* high-density polyethylene HDPE), and a combination of two or more thereof.

It should be noted that any MAH-g-PO falling under component (B) is excluded from component (C).

All polyolefins present in the polymer composition according to the present invention are either maleic anhydride-grafted polyolefin (MAH-g-PO) falling under (B), or included in the one or more polyolefins under (C).

In an embodiment, the composition comprising as (C) 100 wt.% of a polypropylene composition, based on the weight of (C), preferably the polypropylene composition comprises at least 25 wt.% of one or more heterophasic propylene copolymers, based on the weight of the polypropylene composition. The use of heterophasic propylene copolymers has the advantage that it will assist in the forming of co-continuous phases in a polymer composition, in particular in a polymer alloy. In this embodiment, the polymer composition is preferably an alloy or a mixture of an alloy with a polymer blend. For example, during the formation of the alloy one or more heterophasic propylene copolymers are added, preferably in an amount of at least 80 wt.% based on the amount of (C) present during the alloy formation. During an additional blending step, additional polypropylene (even with 0 wt.% of heterophasic PP, such as up to 100 wt.% of homo PP which is favoured by cast film productions) to lead to the overall composition. It was found by the present inventors that an overall amount of at least 25 wt.% leads to optimal formation of the co-continuous phases.

*Specific embodiments*

In a specific embodiment, the polymer composition comprises under (A)(i) a mixture of PA6 and PA6/66 and comprises under (C) one or more polyethylene compositions; in this embodiment there are no polypropylene compositions present under (C).

In a specific embodiment, the polymer composition comprises (A)(i) a mixture of PA6 and PA6/66 and comprises under (C) only one or more polypropylene compositions, wherein said one or more polypropylene compositions comprise at least 25 wt.% (preferably more than 25 wt.%) of a heterophasic polypropylene composition; in this embodiment there are no polyethylene compositions present under (C).

In a specific embodiment, the polymer composition comprises (A)(i) a mixture of PA6 and PA6/66 and comprises under (C) one or more polypropylene compositions, wherein said one or more polypropylene compositions comprise at least 80 wt.%, preferably more than 80 wt.%, of a heterophasic polypropylene composition; in this embodiment there are no polyethylene compositions present under (C).

In a specific embodiment, the polymer composition comprises under (A)(i) PA6/66 and comprises under (C) one or more polyethylene compositions; in this embodiment there are no polypropylene compositions present under (C).

In a specific embodiment, the polymer composition comprises (A)(i) PA6/66 and comprises under (C) one or more polypropylene compositions, wherein said one or more polypropylene compositions comprise at least 25 wt.%, preferably more than 25 wt.%, of a heterophasic polypropylene composition; in this embodiment there are no polyethylene compositions present under (C).

In a specific embodiment, the polymer composition comprises (A)(i) PA6/66 and comprises under (C) one or more polypropylene compositions, wherein said one or more polypropylene compositions comprise at least 80 wt.%, preferably more than 80 wt.%, of a heterophasic polypropylene composition; in this embodiment there are no polyethylene compositions present under (C).

In a specific embodiment, the polymer composition comprises under (A)(i) PA6 and comprises under (C) one or more polyethylene compositions; in this embodiment there are no polypropylene compositions present under (C).

## Extruded article

As stated above, the present invention relates in a second aspect to an extruded article comprising at least 70 wt.% of the polymer composition according to the first aspect. The formed plastic articles present strong polyamide/vinyl alcohol properties such a high oxygen (or other non-polar substances) barrier and higher thermal resistance while still maintain the strong polyolefin properties such as high water vapour (or other polar substances) barrier.

The present inventor has a hypothesis that in the first aspect, the preparation of polymer composition, due to the existence of component (B) the interfacial tension between the PO and PA/VA phases are low enough to keep the PA/VA phase as the small droplets well dispersed in the PO phase which is the majority phase by volume. While in the second aspect, when the polymer composition is extruded and optionally moulded into articles, polymer molecules are to a certain extent oriented in the flow direction of viscous extrudates, wherein the droplets phases are oriented, stretched, and at least in some areas connected and, hence, change into at least partially continuous fibrillar or lamellar structures. When the molecular orientation remains, the continuous structure remains.

In the second aspect, according to claim 13, the invention relates to an extruded article comprising the polymer composition according to the first aspect in an amount of at least 75 wt.% of the weight of the article, preferably at least 80 wt.%, at least 85 wt.%, at least 90 wt.%, at least 95 wt.% or even 100 wt.%. In other words, the article may consists fully of the polymer composition of the present invention. In case the article comprises less than 100 wt.% of the polymer composition, the remaining components are other components that are known to a person skilled in the art, e.g. glass fibers, particulate fillers. The "other components" do not comprise any polyamides, vinyl alcohols, maleic anhydride-grafted polyolefins, or polyolefin compositions.

In the present invention, preferably all polyamides and vinyl alcohols are part of component (A), all maleic anhydride-grafted polyolefins are part of component (B) and all polyolefin compositions are part of component (C).

Such other components are typically the inorganic and organic fillers. Typical fillers include but not limited to glass beads, glass fibers and carbon fibers as the reinforcement filler; talc or magnesium as the thickening agent to reduce warpage and sink on thick walls; calcium carbonate as the thermal stability agent; mica such as muscovite or phlogopite to improve rigidity with retention of toughness; silicate mineral powders such as kaolinite and wollastonite for low distortion rigid molded parts; flame retardancy fillers such as melamine cyanurate (MeCy), carbon black, carbon nanotubes (CNTs), aluminum trihydroxide (ATH), and phosphates.

In an embodiment of the second aspect, the article is selected from the group consisting of a film, a sheet, a container, such as a bottle, a tube, a profile, a foam, a monofilament, and a multifilament. In case the present polymer compositions is used in preparation of a multilayer structure, than at least one of the layers should comprise at least of 75 wt.% of the polymer compositions as discussed in the paragraph above.

In an embodiment, wherein one or more VAs are present in (A), the article is in the form of a monofilament or a multifilament, since the high modulus of VAs is desired by some applications of filaments. Said article preferably having the performance advantages of PA/VA such as higher tensile strength, higher bending resilience, higher temperature resistance and higher abrasion resistance, and the performance advantages of PO such as high dimensional stability, low dielectric constant and high chemical resistance. The monofilament may be further extruded in fused deposition modelling (FDM) process to form a 3D printed part. The 3D printed part presents the performance advantages of both PA/VA and PO.

In an embodiment of the second aspect, the extruded article is a film having a thickness of between 1 and 250 micrometres. For example, it may be a film, such as a blown film, having a thickness of around 50 micrometres, such as 50 micrometres.

In an embodiment of the second aspect, the extruded article is a sheet having a thickness of higher than 250 micrometres. In an embodiment of the second aspect, the extruded article is a foamed sheet. In an embodiment of the second aspect, the extruded article is a blown moulded or injection moulded or thermal formed article such as a bottle, a container or a panel.

In a further embodiment, the extruded article has one or more of the following characteristics: i) an oxygen permeability of less than 6 mL·mm/(mm$^2$·day), preferably less than 5 mL·mm/(mm$^2$·day), more preferably less than 4 mL·mm/(mm$^2$·day), even more preferably less than 3.5 mL·mm/(mm$^2$·day), most preferably less than 2 mL·mm/(mm$^2$·day), measured according ASTM F1927-20 at 23°C and 50% relative humidity, ii) a density of between 0.96 gram/cm$^3$ and 1.05 gram/cm$^3$, preferably between 0.97 gram/cm$^3$ and 1.00 gram/cm$^3$ measured according to ISO 1183-1:2019, method A - immersion method, and iii) a water vapour permeability of less than 0.40 gram·mm/(mm$^2$·day), preferably less than 0.30 gram·mm/(mm$^2$·day), measured according to ASTM F1249-20 at 23°C and 85% relative humidity.

Preferably, the extruded article has all of the three features i), ii), and iii) above.

Method to prepare the article

As stated above, the present invention relates in a third and fourth aspect to a method to prepare an article according the second aspect. The third aspect relates to a method that first prepares a polymer alloy comprising (A), (B), and (C) and them extrudes that alloy into an article, optionally further blending additional (A), (B) and/or (C) to prepare an article of a polymer alloy or polymer alloy blend. The fourth aspect relates to a method that extrudes a polymer composition into an article without prior preparation of an alloy.

In a third aspect, the invention relates to a method for the manufacturing of an extruded article, according to claim 15. This relates to a method for the manufacturing of an extruded article, the method comprising step I-a) preparing a polymer alloy of (A), (B) and (C); and step I-b) preparing the extruded article by extrusion of the polymer alloy prepared in step I a), and optionally adding additional (A) and/or additional (B) and/or additional (C) during the extrusion of the article. The polymer alloy prepared in step I-a) is prepared by reactive extrusion. The reactive extrusion may be preceded by a step of dry blending or online dosing of all ingredients (A), (B), and (C) at room temperature (20 °C). The reactive extrusion may be carried out on a co-rotating twin screw extruding having an ascending temperature profile, for example starting at a temperature of between 140 and 210 °C in the first extrusion zone and increasing to a final temperature of between 200 and 250 °C in the final extrusion zone using an extrusion speed of between 250 and 1000 RPM. The processing parameters are tuned so as to keep the measured temperature in the melt at between 260 and 320 °C, preferably between 275°C and 305°C. In addition, the die pressure is tuned so as to keep the fluctuation at less than 5%, preferably less than 3%, more preferably less than 1.5 %. When the die pressure fluctuation is higher than preferred range, the polymer composition maybe reprocessed again to reach optimal homogeneity of reaction.

In this method, (A) comprises (i) one or more polyamides, selected from polyamide 6, polyamide 6/66, or a combination thereof, wherein each of the one or more polyamides has a relative solvent viscosity (RSV) measured in 90% formic acid of 2.5 or higher, and (ii) optionally one or more vinyl alcohols, selected from poly vinyl alcohol (PVOH), ethylene vinyl alcohol (EvOH), or a combination thereof. In this method (B) comprises one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins. In this method (C) comprises one or more polyolefin compositions, selected from a polypropylene composition, a polyethylene composition, or a combination thereof, wherein: i) said polypropylene composition has a MFR of less than 25 g/10min measured at 230°C under a load of 2.16kg measured according to ISO 1133:1-2011, and/or ii) said polyethylene composition has an MFR of less than 5 g/10min measured at 190°C under a load of 2.16kg measured according to ISO 1133:1-2011.

In this method of the third aspect, the extruded article comprises the polymer composition according to the first aspect in an amount of at least 75 wt.% of the weight of the article, preferably at least 80 wt.%, at least 85 wt.%, at least 90 wt.%, at least 95 wt.% or even 100 wt.%. Any remaining amount of the extruded article is comprised of other components, discussed above.

In a fourth aspect, the invention relates to a method for the manufacturing of an extruded article, the method according to claim 16. This relates to a method for the manufacturing of an extruded article, the method comprising step II) of preparing the article by extrusion of between 30 and 60 wt.% of (A), between 1.5 and 15 wt.% of (B), and between 25 and 68.5 wt.% of (C), based on the combined weight of (A), (B), and (C). Preferably, the components are first dry blended and subsequently extruded or dosed online and extruded directly on a single screw extruder with an ascending temperature profile for example starting at a temperature of between 190 and 220 °C in the first extrusion zone, and increasing to a final temperature of between 240 and 260 °C. Compared with reactive extrusion which has a specifically designed twinscrew extruder to reach a defined temperature in the melt and die pressure profile to achieve optimal chemical reaction and mixing, extrusion blending via general purpose extruders relies more on selecting the right polymer components with matching rheological properties to reach a fairly good mixing. Chemical reactions may still be much less optimal; therefore, it is a technically less preferred manufacturing method compared with that of the third aspect. But this method has cost advantage and may still produce good enough products for some single-use applications such those for packaging.

In this method, (A) comprises (i) one or more polyamides, selected from polyamide 6, polyamide 6/66, or a combination thereof, in an amount of between 20 and 100 wt.% based on the weight of (A), wherein each of the one or more polyamides has a relative solvent viscosity (RSV) measured in 90% formic acid of 2.5 or higher, and (ii) one or more vinyl alcohols, selected from poly vinyl alcohol (PVOH), ethylene vinyl alcohol (EvOH), or a combination thereof, in an amount of between 0 and 80 wt.% based on the weight of (A). In this method, (B) comprises one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins. In this method (C) comprises one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has an MFR of less than 5 g/10min measured at 190°C under a load of 2.16kg measured according to ISO 1133:1-2011.

In this method of the fourth aspect, the extruded article comprises the polymer composition according to the first aspect in an amount of at least 75 wt.% of the weight of the article, preferably at least 80 wt.%, at least 85 wt.%, at least 90 wt.%, at least 95 wt.% or even 100 wt.%. Any remaining amount of the extruded article is comprised of other components, discussed above.

The method of extrusion of the third or fourth aspect may comprise: 3D printing, film or sheet extrusion, monofilament or multifilament extrusion, foam or tube or profile extrusion, extrusion blow moulding, injection blow moulding, stretch blown moulding, thermoforming, injection moulding, or extrusion coating. It may for example comprises injection moulding, blow moulding or thermoforming the polymer composition according to the first aspect of the present invention.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The scope of the present invention is defined by the appended claims. One or more of the objects of the invention are achieved by the appended claims.

## Methods for measuring

Melt flow rate (MFR), if not specifically specified, was measured according to ISO 1133:1-2011. There are two conditions applied. For polypropylene polymers (not grafted) it is at 230°C, 2.16 kg; for polyethylene polymers and maleic anhydride-grafted polyolefin polymers it is at 190°C, 2.16kg.

Differential Scanning Calorimetry (DSC), if not specifically specified, was conducted according to ASTM D3418-03. A slice (weight of between 4 - 5 mg) of a polymer granule was cut as the test specimen. Each test specimen was heated from - 20°C to 50°C above polymer melting temperature (peak temperature) at a heating rate of 20K/minute (first heating scan) to remove the thermal history. The sample was then held for 5 minutes under at the peak temperature, then cooled at 20K/minute to -20 °C (cooling scan). The sample was then held for 5 min under temperature of -20°C. Afterwards the sample was heated again from -20°C to peak temperature at a heating rate of 20 k/min (second heating scan).

Blown Film samples was prepared under Collin Blown Film Unit BL 200. Film die diameter is 94.2 mm, die gap is 0.8 mm. Extrusion temperature was 260°C. Blow-up-Ratio was 2.5 - 2.6. Film thickness was around 30 micron.

Oxygen Transmission Rate (OTR), if not specifically specified, is measured according to ASTM F1927-20, at 23°C and 50% relative humidity. It has a unit of ml/(m²·day). OTR is dependent on the thickness of the measured sample.

When the test sample (whole structure of the sample) is made from one material which is defined as one polymer composition, the measured OTR can be converted into an Oxygen Permeability (OP) value according to the following equation (III):

$$OP = \frac{OTR \times Film\ thickness\ (\mu m)}{1000} \quad Equation\ (III)$$

OP has a unit of ml·mm/(m²·day). Physically, it defines the oxygen permeation property of a homogeneous mono material. OP is not dependent on the thickness of measured sample. Instead, it is used to predict the OTR of a plastic film (sheet or wall) with a given thickness, assuming the film (sheet or wall) is not further stretched in solid state (See Equation IV).

$$OTR = \frac{OP \times 1000}{Film\ (Sheet\ or\ Wall)\ thickness\ (\mu m)} \quad Equation\ (IV)$$

Water Vapour Transmission Rate (WVTR), if not specifically specified, is measured according to ASTM F1249-20, at 23°C and 85% relative humidity. It has a unit of gram/(m²·day). WVTR is dependent on the thickness of the measured sample.

When the test sample (whole structure of the sample) is made from one material which is defined as one polymer composition, the measured WVTR can be converted into a Water Vapour Permeability (WVP) value according to the following equation (V):

$$WVP = \frac{WVTR \times Film\ thickness\ (\mu m)}{1000} \quad Equation\ (V)$$

WVP has a unit of gram·mm/(m²·day). Physically, it defines the water vapour permeation property of a homogeneous mono material. WVP is not dependent on the thickness of measured sample. Instead, it is used to predict the WVTR of a plastic film (sheet or wall) with a given thickness, the film (sheet or wall) is not further stretched in solid state (see Equation VI).

$$WVTR = \frac{WVP \times 1000}{Film\ (Sheet\ or\ Wall)\ thickness\ (\mu m)} \quad Equation\ (VI)$$

The density of the polymer compositions was determined according to ISO 1183-1:2019 with the immersion method. The density of cited examples from literatures was estimated according to the following equation (VII):

$$\rho_p = \frac{1}{\sum_i^n \frac{\rho_i}{\varphi_i}} \quad Equation\ (VII)$$

wherein $\rho_p$ = density of whole polymer composition, $\rho_i$ = density of each polymer component, and $\varphi_i$ = weight percentage of each polymer component.

EXAMPLES

The present invention is further elucidated based on the Examples below which are illustrative only and not considered limiting to the present invention.

**Materials**

If there is no specification, all materials used by the examples are listed as the following of Component (A), (B), and (C):

Component (A): the polyamide homo polymer is PA6 having a relative viscosity index of 3.0 - 3.2 measured in 90% formic acid. The polyamide copolymer is PA6/66 having a relative viscosity index to 3.4 - 3.6 measured in 90% formic acid. The Ethylene vinyl alcohol is a copolymer of ethylene and vinyl alcohol (EVOH) with 32 mol% of ethylene content. It has an MFR of 6 - 7 g/10 min @ 230°C, 2.16kg. The poly vinyl alcohol (PVOH) polymer has a viscosity of 5-6 mPa.s reported in Centipoise of a 4% aqueous solution at 20°C.

Component (B). The maleic anhydride-grafted functionalized propylene based (co-)polymers and or elastomers (MAH-g-PP) has an MFR of 50 - 100 g/10min @ 190°C 2.16kg. The maleic anhydride-grafted functionalized ethylene (co-) polymers and or elastomers (MAH-g-PE) has an MFR of 7.5 - 11 g/10min @ 190°C 2.16kg. Typically a high-flow anhydride-grafted functionalized polyolefin has a very broad molecular weight distribution. Therefore, its MFR is often a range instead of a specific value.

Component (C) has two types of polypropylene polymers (PP) used by examples. The heterophasic propylene copolymer used by polymer alloy examples (Hetero-B-cPP) has a MFR of 0.7 - 1.2 g/10 min @ 230°C, 2.16kg, a melting peak in DSC second heating scan of 162 - 165°C. The propylene homopolymer (Homo-PP) used by film extrusion blends has a MFR of 2.0 g/10 min @ 230°C, 2.16kg, a melting peak in DSC second melting scan of 162 - 164 °C. The polyethylene (PE) in the example is a low-density polyethylene polymer (PE) has a MFR of 0.5 g/10 min @ 230°C, 2.16kg, a melting peak in DSC second melting scan of 122 - 124 °C.

Polymer alloys with compositions were made from above listed polymers are prepared by reactive compounding using Coperion ZSK Mc18 twin screw extruder. Polymers were first dry blended according to the recipes then extruded at a mild ascending temperature profile began at 190°C at zone 1 and gradually increased to 210°C at zone 9. The processing parameters are then fine-tuned to keep measured temperature in the melt at between 275°C and 285°C, and the die pressure fluctuation less than 5 bars. Afterwards, the polymer composition is reprocessed at 500rpm with a standard output of 6kg/hour to reach optimal homogeneity.

Film extrusion blends were made from the blends of Polymer Alloys with one or more polymers from above listed polymers from Component (A), (B), and/or (C) or from a combination from above listed polymers from Component (A), (B), and (C) without polymer alloy. Polymers were first dry blended according to the recipes then extruded at Collin Teachline® E20T single screw extruder which is connected to Collin Blown Film Unit BL 200. Polymer blends were extruded at a mild ascending temperature profile began at 220°C at zone 1 and gradually increased to 260°C at zone 5. The extrusion speed was set at 80 RPM.

Composition of polymer alloy examples

Table 1 shows the composition of polymer alloy samples **A1, A2, A3,** and **A4.** Table 1 shows in wt.% the amount of component (A) being either PA6, PA6/66, EvOH, PVOH or a combination thereof, component (B) being either MAH-g-PP or MAH-g-PE, and component (C) being either PP or PE. The total amount of components (A), (B), and (C) adds up to 100 wt.%. Samples **A1, A2, A3,** and **A4** were all formulated according to the present invention. For polymer alloy samples **A1** and **A4,** the PP in component (C) of is Hetero-B-cPP and for polymer alloy samples **A2** and **A3,** the PE component (C) is low-density polyethylene polymer.

*Table 1: Recipes of polymer alloy compositions made my reactive extrusion*

| | (A) in wt.% | | | | (B) in wt.% | | (C) in wt.% | |
|------|-----|--------|------|------|----------|----------|-----|-----|
| # | PA6 | PA6/66 | EvOH | PVOH | MAH-g-PP | MAH-p-PE | PP | PE |
| A1 | 45 | | | | 5 | | 50 | |
| A2 | | 57 | | | | 8 | | 35 |
| A3 | | 30 | 27 | | | 5 | | 38 |
| A4 | 33 | | | 22 | 7 | | 38 | |

Table 4 shows the characteristics of polymer alloy samples listed in Table 1. It shows in wt.% the amount of component (A) which is the total amount of PA6, PA6/66, EVOH, and PVOH; of component (B) which is the total amount of MAH-g-PP and MAH-g-PE; and of component (C) which is the total amount of PP and PE.

In terms of component (A), Table 4 further shows in wt.% the amount of PA (polyamides) which is the total amount of PA6 and PA6/66; and the amount of VA (vinyl alcohol polymers) which is the total amount of EVOH and PVOH. Here the total amount of component (A) is set as 100 wt.%, which is a combination of polyamides and vinyl alcohol polymers.

In terms of component (B), Table 4 shows two important characters according to current invention: the MFR and the MFR Ratio. Table 4 also lists the MAH concentration which is the total of reacted and unreacted MAH. In the polymer alloy recipes according to current invention, it is desired to keep a low MAH concentration threshold of below 0.15 wt.% of the total polymer composition.

All polymer alloy samples (**A1-A4**) according to the present invention have reached the desired OP (Oxygen Permeability) and all are significantly lower than 6 ml·mm/(mm$^2$·day) target. All polymer alloy samples (**A1-A4**) according to the present invention have reached the desired WVP (Water Vapour Permeability) and all are significantly lower than the 0.4 gram.mm/(m$^2$·day) target. It is beneficial for a polymer composition (in casu polymer alloy) according to the present invention to have low OP and WVP values so that it can reach the barrier target even after these alloys are being diluted by blending with component (A), (B), and or (C) to obtain a polymer composition/blend according to the invention.

The densities of all polymer alloy samples (**A1-A4**) according to the present invention are within the range of 0.96 - 1.05 gram/cm$^3$. They even are higher than 0.97 gram/cm$^3$. This density range differentiates from the polyolefins (lower than 0.97 or even lower than 0.96 gram/cm$^3$) and most engineering polymers (higher than 1.05 gram/cm$^3$). This means the polymer composition according to current invention could be sorted separately by sink-float technologies during recycling, which is a benefit.

Composition of polymer (alloy) blends - without vinyl alcohol groups

Table 2 presents the composition of examples formed during blown film extrusion by either blending the polymer alloy with components (A), (B), and/or PE for (C) or by directly blending components (A), (B), and (C). In these examples, vinyl alcohol polymers from component (A) were not applied. samples **EA1-1** and **EA1-2** are according to the invention and are based on polymer alloy **A1** discussed above.

Comparison sample **QC1** and sample **QC3** used the polymer alloys **A1** and **A2** respectively according to the present invention and in addition use components (A), (B) and (C) that are as discussed above for the examples according to the invention. They are prepared in the same way as the examples according to current invention. They are however not according to the invention as shown in Table 4 below by the bold values. **QC1** has a too high total amount of (A). **QC3** has a PA value of 31.4 wt.% that is just above the lower threshold of 30 wt.% and below the preferred threshold of 35 wt.% in case there is no VA present in component (A).

Comparison sample **LC1** is cited from literature, J. Feng, J Polymer Sci Part B: Polymer Physics Vo. 57, Issue 5 p. 281-290 (2019). The sample (coded as 30/55/15) has 55 wt.% of PA6, 30 wt.% of HDPE, and 15 wt.% of MAH-g-HDPE. The PA6 has an MFR of 1.2 g/10min measured at 230°C 2.16kg. It is estimated as equivalent to a relative viscosity index of 3.6 measured in 90% formic acid. The HDPE has an MFR of 0.78 g/10min at 190°C 2.16kg. The MAH-g-HDPE has an MFR of 5.0 g/10min at 190°C and 2.16kg which is outside of the range of the present invention. The characteristics of the polymer compositions of Table 2 are shown in Table 4 below.

*Table 2: Recipes of polymer blends examples (without vinyl alcohol groups)*

| | | (A) | | (B) | | (C) | |
|---|---|---|---|---|---|---|---|
| # | Alloy (wt.%) | PA6 | PA6/66 | MAH-g-PP | MAH-p-PE | PP | PE |
| **EA1-1** | 80.0 A1 | | | | | | 20.0 |
| **EA 1-2** | 70.0 A1 | 20.0 | | 10.0 | | | |
| **QC1\*** | 60.0 A1 | | 40.0 | | | | |
| **QC3** | 55.0 A2 | | | | | | 45.0 |
| **LC1\*** | 0.0 | | 55.0 | | | | 30.0 |
| \* comparative example | | | | | | | |

samples **EA1-1** is a blend of 80 wt.% of polymer alloy **A1** with 20 wt.% of LDPE. Adding LDPE has improved blown film processability such as bubble stability and less wrinkles. The OP of **EA1-1** is about 40% higher than that of the polymer alloy **A1** from which is was prepared, namely 3.95 ml·mm/(m$^2$·day) compared to 2.80 ml·mm/(m$^2$·day), but this is still much lower than 6 ml·mm/(m$^2$·day) target (see Table 4). The good OP result suggests that the PA phase of component (A), even though only 36 wt.% of the total composition of **EA1-1,** can still bring good OP thanks to the partially continuous PA phase in the film.

Samples **EA1-2** and **QC3** were created to be used for multilayer films wherein the functional barrier layer of **EA1-2** (being a PP system) or **QC3** (being a PE system) can adhere directly to the respective additional PP and PE layers of the multilayer films without the requirement of using bonding layers in between.

Sample **EA1-2** uses the strategy of high dosage of maleic anhydride-grafted (MAH-g-PP), namely 13.5 wt.%, which can enhance the continuity of the PP phases to improve the bonding with PP. However, this is at the cost of reducing the continuity of the PA phases. Thus, 20 wt.% (based on total polymer composition) of extra PA (total amount 51.5 wt.%) was therefore added in the blend to compensate. Consequently, the MAH concentration of **EA1-2** reaches 0.14 wt.% of the total polymer composition, leading to an OP of 4.91 ml·mm/(m$^2$·day), which is 75% higher than that of **A1,** namely wherein the PA fraction is only 45 wt.%. This result confirms that higher dosage of component (B) reduces the OP performance of the blends. This result suggests that the MAH dosage in **EA1-2** is approaching the higher boundary of the current invention to reach desired OP and WVP; the claimed composition poses 15 wt.% as a upper limit for (B), whereas the amount of MAH should be below 0.15 wt.%.

The present inventor has used a different strategy with **QC3** by increasing the fractions of PE to improve bonding with PE layers.

To prepare for **QC3,** the polymer alloy of sample **A2** was first prepared. In **A2,** PA6/66 instead of PA6 is selected because the lower melting temperature of PA6/66 fits better with the lower melting temperature of PE in film extrusion. Since OP of PA6/66 is inferior to that of PA6, 57 wt.% PA6/66, based on the total polymer composition of **A2,** is added. In comparison, **A1** has only 45 wt.% of PA6. OP and WVP of **A1** and **A2** are in the same range.

Then, 55 wt.% of **A2** was blended with (diluted by) 45 wt.% of LDPE in blown film extrusion to make sample **QC3.** Its OP, 16.36 ml·mm/(m$^2$·day), still significant lower than that of LDPE (200 ml.mm/(m$^2$.day), is however a factor of 3 higher than that of **EA1-1.** But the PA fraction of **QC3** is reduced to only 31.4 wt.%, while that of **EA1-1** is 36.0 wt.%. This result proves that the PA dosage of **QC3,** wherein PA is 100 wt.% of the component (A), lower than the lower boundary of the preferred embodiment being a lower limit of 35 wt.% of one or more polyamides in case (A) consists for 100 wt.% out of one or more polyamides, cannot reach desired OP.

Comparison sample **QC1** has 67 wt.% PA in the total formulation, which is outside of the claimed range. **QC1** was made by blending 55 wt.% of polymer alloy composition **A1** with 45 wt.% of PA6/66 in blown film extrusion. PA6/66 instead of PA6 was selected to improve the bubble stability and blown-up-ratio (BUR) of the film. Although the OP of **QC1** is within the desired range, being only 2.00 ml·mm/(m$^2$·day), the WVP of 0.59 g·mm/(m$^2$·day) is outside but close to the desired upper limit of 0.40 g·mm/(m$^2$·day) of the current invention. This result suggests that the PA dosage of **QC1,** wherein PA is 100 wt.% of the component (A), being outside of the upper boundary of the current invention, leads to a composition with undesirable WVP.

The OP and WVP of comparison sample **LC1** are outside of but close to the desired range of the current invention. When zooming into the polymer composition, the MFR of MAH-g-PE is 5.0 g/10min at 190°C 2.16kg which is just outside the lower boundary of the current invention, which is > 5.0 g/10 min. In addition, the MFR Ratio is only 6.4 which is lower than the lower boundary of the current invention (8.0). A high MFR Ratio can efficiently improve the mixing of PA and PE phases, and it can furthermore boost the continuity of PA and PE phases hence improve the OP and WVP. Due to the lower MFR Ratio in **LC1,** a very high amount of MAH-g-PE (15 wt.%) must be used to improve the mixing of PA and PE phases. But the high amount of MAH-g-PE has apparently jeopardized the continuity of PA phases hence increase the OP as also observed in sample **EA1-2.** In comparison, the MFR Ratio of sample **A2** is estimated at 15 - 22, significantly higher than that of **LC1.** Consequently, **A2** has reached much lower OP and WVP.

## Composition of polymer (alloy) blends - with vinyl alcohol groups

Table 3 presents the composition of examples formed during blown film extrusion by blending the polymer alloy with components (A), (B), and/or (C), or blending just components (A), (B), and (C). In these examples, vinyl alcohol polymers from component (A) were applied. The PP added to the examples of this group during blown film extrusion is a PP-Homo polymer.

Comparison samples **QC2** and **QC4** used the same polymers and was prepared in the same way as the examples according to the current invention.

Comparison sample **LC2** is cited from the literature, Huang-CH, J Polymer Research 11: 75-83, 2004. The sample **LC2** has 15 wt.% of 32 mol% EVOH with an MFR of 1.6 g/10min at 190°C/10min as component (A), and 85 wt.% of LDPE with an MFR of 0.27 g/10min at 190°C/10min as component (C). **LC2** has 0 - 10 wt.%, based the total weight of (A) and (C), of MAH-g-PE as component (B). The MFR and the MAH concentration of MAH-g-PE was not specified by the literature.

Comparison sample **LC3** is cited from the literature, Jong Ho Yeo, Advances in Polymer Technology Vol. 20, No.3, 191-201(2001). LC3 has 15 wt.% of 44 mol% EVOH with an MFR of 5.5 g/10min at 190°C 2.16kg as component (A), and 85 wt.% of PP-Homo with an MFR of 2.0 g/10min at 230°C 2.16kg as component (C). **LC3** has 0 - 10 wt.%, based the total weight of (A) and (C), of MAH-g-PP as component (B). The MAH concentration is 0.3 wt.% and the MFR is 22.0 g/10min at 190°C 1.2kg. OTR of **LC3** is measured a biaxially stretched film. The MFR ratio of this sample is calculated as 11. But the actual ratio is significantly higher because the MFR of component was measured at 1.2 kg instead of 2.16kg.

Comparison sample **LC4** is cited from the literature, Yeh, JT, Chen-HY, J Mater Sci (2007) 42:5742-5751. **LC4** is produced in two steps: First a grade named as MPA was produced by mixing 80 wt.% PA6 with 20 wt.% of functionalized polyolefin copolymer (CP) specified as 40% zinc-neutralized ethylene/acrylic acid (95:5) copolymer. Then 66.67 wt.% of MPA was blended 33.33 wt.% of a 32 mol% EVOH.

*Table 3: Recipes of polymer blends examples with vinyl alcohol groups*

| # | Alloy (wt.%) | (A) | | | | (B) | | (C) | |
|---|---|---|---|---|---|---|---|---|---|
| | | PA6 | PA6/66 | EvOH | PVOH | MAH-g-PP | MAH-p-PE | PP | PE |
| **EA1-3** | 35.0 A1 | | | 15.0 | | | | | 50.0 |
| **EA1-4** | 50.0 A1 | | | 20.0 | | | | 30.0 | |
| **EA1-5** | 50.0 A1 | | | 20.0 | | | 5.0 | | 25.0 |
| **EA2-1** | 40.0 A2 | | | 20.0 | | | 2.0 | | 38.0 |
| **EA3-1** | 75.0 A3 | | | | | | 2.0 | | 23.0 |
| **EA4-1** | 70.0 A4 | | | | | | | | 30.0 |
| **QC2*** | 50.0 A1 | | | 20.0 | | 16.0 | | 14.0 | |
| **QC4*** | 50.0 A4 | | | | | | | | 50.0 |
| **LC2*** | | | | 14.0 | | | 10.0 | | 76.0 |
| **LC3*** | | | | 14.0 | | 4.0 | | 4.0 | |
| **LC4*** | | 53.0 | | 33.0 | | | | | 13.0 |
| * comparative example | | | | | | | | | |

Vinyl alcohol polymers such as EVOH and PVOH are used in this group of examples due to their ultra-high barrier property to oxygen. The purpose is either to further boost the OP to make the functional barrier layer thinner, or to allow more polyolefins added to the functional barrier layer that could still bring good enough OP.

sample **A1** is a PA6 and Hetero-B-cPP based polymer alloy. It is further blended with EVOH and LDPE to make sample of **EA1-3** and **EA1-5;** and with EVOH and PP-Homo to make sample **EA1-4.** The OP of **EA1-3,** 4.84 ml.mm/(m$^2$.day) is still within the desired range, and the total amount of (B) and (C) (viz. 100 wt.% minus (A)), which is the polyolefin content, has reached 69.3 wt.% of the polymer composition. **EA1-4** has reached an impressively low OP which is a 80% lower than that of **A1** (0.60 compared to 2.80 ml·mm/(m$^2$·day)). Whereas both samples have the similar polyolefin content (total of component (B) and (C)): 55.0 wt.% (**A1**) vs. 57.5 wt.% (**EA1-4**) of total polymer composition. **EA1-5** has 5 wt.% of MAH-g-PE added during the step of blown film extrusion to improve the bonding with PE layers in a multi-layer film. The OP of **EA1-5** is still impressively low as 1.06 ml.mm/(m$^2$.day).

## Table 4: Characteristics of all polymer compositions

| # | (A) (wt.%) | PA (wt.%) | VA (wt.%) | (B) (wt.%) | MFR(B) (g/10min) | Ratio MFR(B) vs MFR(C) | (C) (wt.%) | MAH (wt.%) of (A)+(B)+(C) | OP (ml.mm/(m².day)) | WVP (gram/(m².day)) | Density (gram/cm³) |
|---|---|---|---|---|---|---|---|---|---|---|---|
| Claims | 25-60 | 20-100 | 0-80 | 2-15 | >5 | >8 | 25-73 | <0.15 | <6 | <0.4 | 0.96-1.05 |
| A1 | 45.0 | 100.0 | 0.0 | 5.0 | 50-100 | 42-143 | 50.0 | 0.05 | 2.80 | 0.14 | 0.99 |
| EA1-1 | 36.0 | 100.0 | 0.0 | 4.0 | 50-100 | 42-143 | 60.0 | 0.04 | 3.95 | 0.15 | 0.98 |
| EA1-2 | 51.5 | 100.0 | 0.0 | 13.5 | 50-100 | 42-143 | 35.0 | 0.14 | 4.91 | 0.14 | 0.96 |
| EA1-3 | 30.8 | 51.2 | 48.8 | 1.8 | 50-100 | 42-143 | 67.5 | 0.02 | 4.84 | 0.13 | 0.98 |
| EA1-4 | 42.5 | 52.9 | 47.1 | 2.5 | 50-100 | 25-143 | 55.0 | 0.03 | 0.60 | 0.14 | 0.99 |
| EA1-5 | 42.5 | 52.9 | 47.1 | 7.5 | 7.5-100 | 15-143 | 50.0 | 0.05 | 1.06 | 0.17 | 0.99 |
| A2 | 57.0 | 100.0 | 0.0 | 8.0 | 7.5-11 | 15-22 | 35.0 | 0.03 | 3.20 | 0.15 | 1.03 |
| EA2-1 | 42.8 | 53.3 | 46.7 | 5.2 | 7.5-11 | 15-22 | 52.0 | 0.02 | 1.51 | 0.19 | 1.00 |
| A3 | 57.0 | 52.6 | 47.4 | 5.0 | 7.5-11 | 15-22 | 38.0 | 0.02 | 0.49 | 0.22 | 1.04 |
| EA3-1 | 42.8 | 52.6 | 47.4 | 5.8 | 7.5-11 | 15-22 | 51.5 | 0.02 | 1.38 | 1.18 | 1.01 |
| A4 | 55.0 | 60.0 | 40.0 | 7.0 | 50-100 | 42-143 | 38.0 | 0.07 | 0.17 | 0.13 | 1.02 |
| EA4-1 | 38.5 | 60.0 | 40.0 | 4.9 | 50-100 | 42-143 | 56.6 | 0.05 | 2.28 | 0.13 | 1.00 |
| QC1* | 67.0 | 100.0 | 0.0 | 3.0 | 50-100 | 42-143 | 30.0 | 0.03 | 2.00 | 0.59 | 1.04 |
| QC2* | 42.5 | 52.9 | 47.1 | 18.5 | 50-100 | 42-143 | 39.0 | 0.19 | 30.50 | 0.10 | 0.99 |
| QC3 | 31.4 | 100.0 | 0.0 | 4.4 | 7.5-11 | 15-22 | 64.3 | 0.018 | 16.36 | 0.15 | 0.98 |
| QC4* | 27.5 | 60.0 | 40.0 | 3.5 | 50-100 | 42-143 | 69.0 | 0.04 | 15.19 | 0.12 | 0.98 |
| LC1* | 55.0 | 100.0 | 0.0 | 15.0 | 5.0 | 6.4 | 30.0 | not known | 6.16 | 0.58 | 1.03 |
| LC2* | 13.6 | 0.0 | 100.0 | 10.0 | not known | not known | 76.4 | not known | 13.00 | not known | 0.96 |
| LC3* | 14.4 | 0.0 | 100.0 | 3.8 | 22 | 11 | 3.8 | 0.1 | 9.30 | not known | 0.93 |
| LC4* | 86.7 | 61.5 | 38.5 | 0.0 | n.a. | n.a. | 13.3 | n.a. | 0.68 | not known | 1.10 |

Sample **A2** is a PA6/66 and LDPE based polymer alloy. It is further blended with EVOH and LDPE in blown film extrusion to make sample of **EA2-1**. MAH-g-PE was added to **EA2-2** during the step of blown film extrusion to improve the bonding with PE layers in a multi-layer film. **EA2-1** required only 2 wt.% of MAH-g-PE instead of 5 wt.% used in **EA1-5**, because the polymer alloy **A2** in **EA2-1** is already LDPE based contrary to the polymer alloy **A1**. On the other hand, the OP of **EA2-1** (1.51 ml.mm/(m².day)) is 40% higher than that of **EA1-5** (1.06 ml.mm/(m².day)). This suggests that in terms of barrier performance, **A1** is a better choice for the blends.

Sample **A3** is a PA6/66, EVOH, and LDPE based polymer alloy. By using **A3, EA3-1** no longer need to blend additional EVOH during blown film extrusion, when compared to **A2** and **A1.** The simplified blending recipe could improve the consistence of film quality eventually improve the OP. Same as **for EA1-5** and **EA2-1,** MAH-g-PE was added to **EA3-1** during the step of blown film extrusion to improve the bonding with PE layers in a multi-layer film. Due to LDPE in the alloy **A3, EA3-1** requires only 2 wt.% MAH-g-PE to achieve an OP of 1.38 ml.mm/(m$^2$.day), about 10% lower than that of **EA2-2** (1.55 ml.mm/(m$^2$.day)). It confirms the advantage of adding a vinyl alcohol, in particular EVOH, in the polymer alloy.

Sample **A4** is a PA6, PVOH and Hetero-B-cPP based polymer alloy. Compared with EVOH, PVOH is even more sensitive to moisture. Therefore Hetero-B-cPP, due to higher moisture barrier than LDPE, is selected as the component (C). The OP of **A4** is only 0.17 ml.mm/(m$^2$.day), 35% lower than that of **A3.** And the WVP is only 0.13 gram.mm/(m$^2$.day), 39% lower than that of **A3.** Following the same concept of **EA3-1, EA4-1** is created by mixing 70 wt.% **A4** with 30 wt.% LDPE. The OP of **EA4-1** is however 2.28 ml.mm/(m$^2$.day), 69% higher than that of **EA3-1.** This result suggests that OP advantage of **A4** cannot fully off-set the lower concentration disadvantage of barrier polymer component (A) in EA4-1 (38.5 wt.% vs. 42.8 wt.% in **EA3-1**). Comparison sample **QC4** is created by mixing 50 wt.% **A4** with 50 wt.% LDPE. Consequently, the concentration of component (A) in **QC4** is reduced to 27.5 wt.%, lower than the lower limit (30.0 wt.%) of the present invention. The OP of **QC4** increased sharply to 15.19 ml.mm/(m$^2$.day) significantly higher than the target of 6 ml.mm/(m$^2$.day). In contrast, sample **EA1-3,** with 30.8 wt.% of component (A), has reached the OP of 4.84 ml.mm/(m$^2$.day).

The comparison sample **QC2** has the same formulation and fraction of barrier polymers defined as component (A) as that of **EA1-4, EA1-5,** and **EA2-1.** However, the OP of **QC2** is 30.50 ml.mm/(m$^2$.day), a factor of 20 - 30 higher. The result is striking because numerically the MAH concentration of **QC2** (0.19 wt.%) is just approximately 30% higher than the higher boundary of the current invention (0.15 wt.%). In contrast, sample **EA1-2** has no EVOH, with a MAH concentration of 0.14 wt.%, could still reach an OP of 4.91 ml.mm/(m$^2$.day), 84% lower than that of **QC2.**

The literature sample of **LC2** and **LC3** have the same range of EVOH concentration (13 - 15 wt.% of the total polymer composition) compared to that in sample **EA1-3** and **EA4-1,** but the latter two examples also include PA in component (A) contrary to **LC2** and **LC3,** which have additional polyolefins (respectively LDPE and PP-Homo). Theoretically, the missing of PA may not impact because the OP of EVOH is a factor of 20 to 100 better than that of PA. However, the OP of **LC2** (13 ml.mm/(m$^2$.day)) and **LC3** (9.3 ml.mm/(m$^2$.day)) are significantly higher than that of **EA1-3** (4.84 mm.mm/(m$^2$.day)). It suggests the importance of the presence of PA in the polymer composition to reach the targeted OP.

It is also interesting to highlight that **LC3** has a 44 mol% EVOH whose OP is a factor of 3 to 4 higher than a 32 mol% EVOH used by **LC2.** However, the OP of **LC3** is 30% lower than that of **LC2.** Next to the fact that **LC2** is a biaxially stretched PP film, the very high MFR Ratio of **LC2** may be an important contributor. MFR Ratio of **LC2** is calculated as 11 which is higher than the lower boundary claimed by the current invention. But the MFR of PP-g-MAH in the MFR Ratio calculation is 22.0 g/10min at 190°C 1.2kg. It will be significantly higher if it is measure at 2.16kg, which will lead to a much higher MFR Ratio.

Comparison sample **LC4** is a polymer composition created in two steps, however different from the examples according to the current invention. Instead of using MAH-g-PE, **LC4** uses a functionalized polyolefin copolymer (CP) specified as 40% zinc-neutralized ethylene/acrylic acid (95:5) copolymer to play the role of MAH-g-PE. The second difference is that the polymer alloy coded as MA created in the first step has a very high concentration of PA as component (A). It is 80 wt.% of the polymer alloy MA. The third difference is, in the second step of blown film extrusion, **LC4** only blended MA with EVOH without any type of polyolefins. Consequently, the amount of component (A) which is the total of PA and EVOH ends up with 86.7 wt.% of the total polymer composition, which is outside of the claimed scope. Despite such a high amount of component (A), the OP of **LC4** is at the same level of that of sample **EA1-4.** Its WVP is predicted as significantly higher due to very low amount of polyolefin presence in **LC4.** In **EA1-4,** the amount of component (A) is only 42.5 wt.%, which is less than half of that in **LC4.** Such a contrast between **LC4** and **EA1-4** demonstrates the advantages of the current invention.

## Claims

1.  Polymer composition comprising:

    (A) between 30 and 60 wt.% of (i) and (ii) combined:

        (i) one or more polyamides, selected from polyamide 6, polyamide 6/66, or a combination thereof, wherein each of the one or more polyamides has a relative solvent viscosity (RSV) measured in 90% formic acid of 2.5 or higher, in an amount of between 20 and 100 wt.% based on the weight of (A); and

(ii) one or more vinyl alcohols, selected from poly vinyl alcohol (PVOH), ethylene vinyl alcohol (EvOH), or a combination thereof, in an amount of between 0 and 80 wt.% based on the weight of (A);

(B) between 1.5 and 15 wt.% of one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins;

(C) between 25 and 68.5 wt.% of one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has a MFR of less than 5 g/10min measured at 190°C under a load of 2.16kg measured according to ISO 1133:1-2011;

wherein the wt.% of the polymers under (A), (B), and (C) is based on the combined weight of (A), (B), and (C);

on the proviso that when the composition comprises as (C) 100 wt.% of one or more polypropylene compositions, based on the weight of (C), the polypropylene composition comprises at least 25 wt.% of one or more heterophasic propylene copolymers, based on the weight of the polypropylene composition; and

wherein the total maleic anhydride concentration is less than 0.15 wt.%, based on the combined weight of (A), (B), and (C).

2. Polymer composition according to claim 1, having an oxygen permeability of less than 6 mL·mm/(mm$^2$·day) measured according ASTM F1927-20 at 23°C and 50% relative humidity and having a water vapour permeability of less than 0.40 gram·mm/(mm$^2$·day) measured according to ASTM F1249-20 at 23°C and 85% relative humidity.

3. Polymer composition according to claim 2, having an oxygen permeability of less than 5 mL·mm/(mm$^2$·day) measured according ASTM F1927-20 at 23°C and 50% relative humidity and having a water vapour permeability of less than 0.30 gram·mm/(mm$^2$·day) measured according to ASTM F1249-20 at 23°C and 85% relative humidity.

4. Polymer composition according any of the preceding claims, wherein each polyamide has a relative solvent viscosity (RSV) measured in 90% formic acid of 2.7 or higher.

5. Polymer composition according to any of the preceding claims, wherein the one or more maleic anhydride-grafted polyolefins is a maleic anhydride-grafted polypropylene, a maleic anhydride-grafted polyethylene or a combination thereof.

6. Polymer composition according to any one of the preceding claims, wherein (A) comprises between 20 and 90 wt.%, preferably between 30 and 90 wt.%, more preferably between 40 and 70 wt.%, or even between 40 and 60 wt.% of the one or more polyamides and between 10 and 80 wt.%, preferably between 10 and 70 wt.%, more preferably between 30 and 60 wt.%, or even between 40 and 60 wt.% of the one or more vinyl alcohols based on the weight of (A).

7. Polymer composition according to any one of the preceding claims, comprising as (C) 100 wt.% of a polypropylene composition, based on the weight of (C), preferably the polypropylene composition comprises at least 25 wt.% of one or more heterophasic propylene copolymers, based on the weight of the polypropylene composition.

8. Polymer composition according to any one of the preceding claims, wherein (A) comprises one or more polyamides and one or more vinyl alcohols, wherein (B) comprises 100 wt.% of the weight of (B) of maleic anhydride-grafted polypropylene, and wherein (C) comprises 100 wt.% of the weight of (C) of one or more polypropylenes, preferably wherein (A) comprises between 1 and 80 wt.% one or more vinyl alcohols, selected from poly vinyl alcohol (PVOH), ethylene vinyl alcohol (EvOH), or a combination thereof, based on the weight of (A).

9. Polymer composition according to any one of the preceding claims, wherein (A) comprises one or more polyamides and one or more vinyl alcohols, wherein (B) comprises 100 wt.% of the weight of (B) of maleic anhydride-grafted polyethylene, and wherein (C) comprises 100 wt.% of the weight of (C) of one or more polyethylenes, preferably wherein (A) comprises between 1 and 80 wt.% one or more vinyl alcohols, selected from poly vinyl alcohol (PVOH), ethylene vinyl alcohol (EvOH), or a combination thereof, based on the weight of (A).

10. Polymer composition according to any one of the preceding claims, wherein (A) comprises 100 wt.% the one or more polyamides based on the weight of (A), and (A) is present in the polymer composition in an amount of between 35 and 60 wt.% based on the combined weight of (A), (B), and (C).

11. Polymer composition according to any one of the preceding claims, wherein the MFR ratio is > 8, wherein the MFR ratio is according to the following equation:

$$MFR\ ratio \quad = \frac{MFR_{MAH-g-PE\ (B)}}{MFR_{PE\ (C)}} \ or \ \frac{MFR_{MAH-g-PP\ (B)}}{MFR_{PP(C)}}$$

wherein $MFR_{MAH-g-PP}$ or $MFR_{MAH-g-PE}$ is the MFR value of MAH-g-PP or MAH-g-PE, respectively, in component (B);
wherein $MFR_{PE}$ or $MFR_{PP}$ is the MFR number of PE or PP, respectively, in component (C); and
wherein the MFR values are obtained at 190°C 2.16kg measured according to ISO 1133:1-2011.

12. Polymer composition according to any one of the preceding claims, having a density of between 0.96 gram/cm$^3$ and 1.05 gram/cm$^3$, preferably between 0.97 gram/cm$^3$ and 1.00 gram/cm$^3$ measured according to ISO 1183-1:2019, method A - immersion method.

13. Extruded article comprising the polymer composition according to any one of claims 1 to 12 in an amount of at least 75 wt.% of the weight of the article, preferably at least 80 wt.%, at least 85 wt.%, at least 90 wt.%, at least 95 wt.% or even 100 wt.%.

14. Extruded article according to claim 13, wherein the article is selected from the group consisting of a film, a sheet, a container, such as a bottle, a tube, a profile, a foam, a monofilament, and a multifilament.

15. A method for the manufacturing of an extruded article, the method comprising the steps of:

I-a) preparing a polymer alloy of (A), (B) and (C);

(A) (i) one or more polyamides, selected from polyamide 6, polyamide 6/66, or a combination thereof, wherein each of the one or more polyamides has a relative solvent viscosity (RSV) measured in 90% formic acid of 2.5 or higher, and (ii) optionally one or more vinyl alcohols, selected from poly vinyl alcohol (PVOH), ethylene vinyl alcohol (EvOH), or a combination thereof;
(B) one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins;
(C) one or more polyolefin compositions, selected from a polypropylene composition, a polyethylene composition, or a combination thereof, wherein: i) said polypropylene composition has a MFR of less than 25 g/10min measured at 230°C under a load of 2.16kg measured according to ISO 1133:1-2011, and/or ii) said polyethylene composition has an MFR of less than 5 g/10min measured at 190°C under a load of 2.16kg measured according to ISO 1133:1-2011;

I-b) preparing the article by extrusion of the alloy prepared in step I-a), and optionally adding additional (A) and/or additional (B) and/or additional (C) during the extrusion,
wherein the extruded article comprises the polymer composition according to any of the claims 1 to 12 in an amount of at least 75 wt.% of the weight of the article, preferably at least 80 wt.%, at least 85 wt.%, at least 90 wt.%, at least 95 wt.% or even 100 wt.%.

16. A method for the manufacturing of an extruded article, the method comprising the step of:
II) preparing the article by extrusion of between 30 and 60 wt.% of (A), between 1.5 and 15 wt.% of (B), and between 25 and 68.5 wt.% of (C), based on the combined weight of (A), (B), and (C):

(A) (i) one or more polyamides, selected from polyamide 6, polyamide 6/66, or a combination thereof, in an amount of between 20 and 100 wt.% based on the weight of (A), wherein each of the one or more polyamides has a relative solvent viscosity (RSV) measured in 90% formic acid of 2.5 or higher, and (ii) one or more vinyl alcohols, selected from poly vinyl alcohol (PVOH), ethylene vinyl alcohol (EvOH), or a combination thereof, in an amount of between 0 and 80 wt.% based on the weight of (A);
(B) one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins;

(C) one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has an MFR of less than 5 g/10min measured at 190°C under a load of 2.16kg measured according to ISO 1133:1-2011;

wherein the article comprises the polymer composition according to any of the claims 1 to 8 in an amount of at least 75 wt.% of the weight of the article, preferably at least 80 wt.%, at least 85 wt.%, at least 90 wt.%, at least 95 wt.% or even 100 wt.%.

17. Polymer composition comprising:

(A) (i) one or more polyamides, selected from polyamide 6, polyamide 6/66, or a combination thereof, in an amount of between 20 and 100 wt.% based on the weight of (A), wherein each polyamide has a relative solvent viscosity (RSV) measured in 90% formic acid of 2.5 or higher; and (ii) one or more vinyl alcohols, selected from poly vinyl alcohol (PVOH), ethylene vinyl alcohol (EvOH), or a combination thereof in an amount of between 0 wt.% and 80 wt.% based on the weight of (A);

(B) one or more maleic anhydride-grafted polyolefins, each of the one or more maleic anhydride-grafted polyolefins having: i) a MFR of above 10 g/10min measured at 190°C under a load of 2.16kg measured according to ISO 1133:1-2011, and ii) a maleic anhydride concentration of between 0.1 and 1.8 wt.% based on the weight of maleic anhydride-grafted polyolefins;

(C) one or more polyolefin compositions, selected from a polypropylene composition, a polyethylene composition or a combination thereof, wherein: i) said polypropylene composition has an MFR of less than 25 g/10min measured at 230°C under a load of 2.16kg measured according to ISO 1133:1-2011, and/or ii) said polyethylene composition has an MFR of less than 5 g/10min measured at 190°C under a load of 2.16kg measured according to ISO 1133:1-2011;

on the proviso that when the composition comprises as (C) 100 wt.% of one or more polypropylene compositions, based on the weight of (C), the polypropylene composition comprises at least 25 wt.% of one or more heterophasic propylene copolymers, based on the weight of the polypropylene composition; wherein the total maleic anhydride concentration is less than 0.18 wt.%, based on the combined weight of (A), (B), and (C),

wherein the polymer composition has an oxygen permeability of less than 6 mL·mm/(mm$^2$·day), preferably less than 5 mL·mm/(mm$^2$·day), measured according ASTM F1927-20 at 23°C and 50% relative humidity; wherein the polymer composition has a density of between 0.96 gram/cm$^3$ and 1.05 gram/cm$^3$, preferably between 0.97 gram/cm$^3$ and 1.00 gram/cm$^3$ measured according to ISO 1183-1:2019, method A - immersion method; and

wherein the polymer composition has a water vapour permeability of less than 0.40 gram·mm/(mm$^2$·day), preferably less than 0.30 gram·mm/(mm$^2$·day), measured according to ASTM F1249-20 at 23°C and 85% relative humidity.

Europäisches
Patentamt

European
Patent Office

Office européen
des brevets

# EUROPEAN SEARCH REPORT

**Application Number**

EP 25 21 0688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 670 131 A1 (QUINLYTE HOLDING B V [NL]) 24 June 2020 (2020-06-24) * examples A1-A7,B1-B4,C1; table 1 * * paragraphs [0001], [0062], [0097] - [0101], [0103], [0104], [0114] * * claims 13-15 * | 1-17 | INV. C08L23/10 C08L77/02 C08L51/06 C08L23/08 |
| A | FENG JINGXING ET AL: "Effect of compatibilizer on morphology and properties of HDPE/Nylon 6 blends", JOURNAL OF POLYMER SCIENCE PART B: POLYMER PHYSICS , vol. 57, no. 5 11 January 2019 (2019-01-11), pages 281-290, XP093261123, US ISSN: 0887-6266, DOI: 10.1002/polb.24783 Retrieved from the Internet: URL:https://onlinelibrary.wiley.com/doi/full-xml/10.1002/polb.24783 [retrieved on 2025-03-19] * abstract * * example 6; table 2 * * table 1 * * page 281, left-hand column * | 1-17 | |

**TECHNICAL FIELDS SEARCHED (IPC)**

C08L
C09J

The present search report has been drawn up for all claims

| Place of search | Date of completion of the search | Examiner |
|---|---|---|
| Munich | 12 February 2026 | van Bergen, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0688

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| EP 3670131 | A1 | 24-06-2020 | EP | 3670131 A1 | 24-06-2020 |
| | | | US | 2020199361 A1 | 25-06-2020 |

EPO FORM P0459

For more details about this annex : see Official Journal of the European Patent Office, No. 12/82

**REFERENCES CITED IN THE DESCRIPTION**

**Patent documents cited in the description**

- EP 24192268 A

- EP 3670131 A

**Non-patent literature cited in the description**

- **J. FENG**. *J Polymer Sci Part B: Polymer Physics*, 2019, vol. 57 (5), 281-290

- **HUANG-CH**. *J Polymer Research*, 2004, vol. 11, 75-83